# FASCICULE DE BREVET EUROPEEN

(11) **EP 3 084 868 B1**
(45) Date de publication et mention de la délivrance du brevet: **14.02.2018**
(21) Numéro de dépôt: 14815304.2
(22) Date de dépôt: 12.12.2014
(51) Int. Cl.: H01M 8/00, H01M 8/0206, H01M 8/0221, H01M 8/0228, H01M 8/0254, H01M 8/0267, H01M 8/1097, H01M 8/241, H01M 8/2475, H01M 8/04007

(54) **STRUCTURE DE CONVERTISSEUR ELECTROCHIMIQUE ENROULE PERFECTIONNE**
VERBESSERTE GEWUNDENE STRUKTUR FÜR ELEKTROCHEMISCHEN WANDLER
IMPROVED WOUND ELECTROCHEMICAL CONVERTER STRUCTURE

(30) Priorité: 16.12.2013 FR 1362685
(43) Date de publication de la demande: 26.10.2016
(73) Titulaire: Pragma Industries, 64200 Biarritz (FR)
(72) Inventeur: ABADIE, Mario, F-64600 Anglet (FR); FORTE, Pierre, F-64200 Biarritz (FR)
(74) Mandataire: Schmit, Christian Marcel Jean
(86) Numéro de dépôt international: PCT/EP2014/077617
(87) Numéro de publication internationale: WO 2015/091284

(56) Documents cités:
- WO-A1-2011/124850
- WO-A1-2011/124863
- DE-A1-102010 046 610
- US-A- 4 988 582
- N De Las Heras ET AL: "A review of metal separator plate materials suitable for automotive PEM fuel cells", Energy & Environmental Science, 21 janvier 2009 (2009-01-21), pages 206-214, XP055134155, DOI: 10.1039/b813231n Extrait de l'Internet: URL:http://pubs.rsc.org/en/content/article pdf/2009/ee/b813231n [extrait le 2014-08-11]

## Description

### Arrière plan de l'invention

### Domaine de l'invention

La présente invention concerne une structure de convertisseur électrochimique enroulé perfectionné, la structure comportant au moins une couche externe en matériau thermiquement conducteur.

### Arrière plan technologique

Le document WO2006/075119 A2 décrit un convertisseur électrochimique de type pile à combustible comportant une membrane protonique enroulée.

Ce convertisseur comporte une pluralité de cellules électrochimiques unitaires raccordées les unes aux autres en série par des bandelettes traversant une bande porteuse des cellules.

Il comporte des moyens pour canaliser de l'hydrogène le long des anodes des cellules sur une face de la bande porteuse et des moyens pour canaliser un flux d'air sur les cathodes des cellule sur l'autre face de la bande porteuse.

Un tel convertisseur est du type pile à cathode ouverte c'est à dire une pile ou la cathode est soumise à un flux d'air ambiant et il est préférable de maintenir la température d'un tel convertisseur aux environs de 60°C.

Lorsque un flux d'air important est amené pour refroidir le convertisseur, un phénomène d'assèchement de l'électrolyte apparaît ce qui fait baisser les performances du convertisseur.

Le document WO2011/124863 A1 permet déjà de limiter l'assèchement en divisant le flux d'air en un flux de refroidissement et un flux de réaction cathodique.

### Brève description de l'invention

La présente invention a pour objet de perfectionner les convertisseurs antérieurs et concerne un convertisseur à pile enroulée proposant notamment:
un meilleur refroidissement du convertisseur,
une plus grande facilité de réalisation du convertisseur enroulé,
une meilleure répartition de l'hydrogène côté anodes,
un filtrage de l'air amené sur les cathodes,
une meilleur gestion de l'eau produite au niveau des cathodes et une meilleur gestion de l'eau produite au niveau des anodes.

Dans cette optique, la présente invention prévoit un convertisseur électrochimique comportant une bande porteuse de cellules électrochimiques unitaires disposées l'une derrière l'autre selon un axe longitudinal de la bande porteuse et reliées en série par des liaisons électriques constituées par des bandelettes passant d'une face à l'autre de la bande porteuse, ladite bande porteuse étant enroulée sur elle même autour d'un axe perpendiculaire audit axe longitudinal, le convertisseur comportant en outre des moyens de réalisation d'un conduit de transport d'hydrogène sur une première face de la bande porteuse portant les anodes et des moyens de canalisation d'air sur une seconde face de la bande porteuse portant les cathodes, pour lequel les moyens de canalisation d'air sont réalisés au moyen d'un feuillard ondulé conducteur thermique réalisant des canaux dans une direction perpendiculaire à l'axe longitudinal de la bande et formant un séparateur entre un flux d'air de refroidissement et un flux d'air de réaction cathodique, le feuillard constituant une couche externe du convertisseur réalisée dans un matériau conducteur thermique et le conduit de transport d'hydrogène comporte une bande de fermeture formant une couche externe du convertisseur côté anodes, en regard de la face de la bande porteuse portant les anode et la bande de fermeture est réalisée en matériau conducteur thermique.

Avantageusement, le feuillard ondulé conducteur thermique est un feuillard métallique et plus particulièrement, le feuillard ondulé peut notamment être un feuillard aluminium, un feuillard acier, inox, cuivre ou réalisé au moyen de leurs alliages.

Préférablement, une couche de matériau isolant électrique est disposée entre le feuillard métallique et les cathodes de la bande.

La couche de matériau isolant électrique est avantageusement un matériau perméable à l'air.

De manière complémentaire ou alternative, le feuillard est pourvu d'un revêtement isolant électrique côté cathodes.

Le revêtement du feuillard côté cathodes est un revêtement tel qu'une peinture, un vernis ou un revêtement anodique et/ou un traitement de surface isolant électrique et/ou anticorrosion.

Le revêtement du feuillard côté cathodes peut aussi être un film polymère, par exemple de type PET, PE ou PA déposé sur le feuillard aluminium ondulé.

Le revêtement du feuillard peut notamment comporter une protection anticorrosion.

La bande de fermeture formant une couche externe du convertisseur côté anodes, en regard de la face de la bande porteuse portant les anode peut avantageusement comporter un revêtement isolant côté anodes.

Des cales d'épaisseur continues longent avantageusement les anodes de la bande porteuse et relient ladite face et la bande de fermeture.

Selon un mode de réalisation avantageux, la bande de fermeture est métallique.

Selon un mode de réalisation alternatif, la bande de fermeture est un polymère chargé conducteur thermique.

Un film isolant électrique est éventuellement intercalé entre la bande de fermeture et les anodes.

Selon un premier mode de réalisation le film isolant électrique est positionné entre les cales d'épaisseur et peut être ou ne pas être collé sous la bande de fermeture; selon un second mode de réalisation, le film isolant électrique est collé sous la bande de fermeture et reçoit les cales d'épaisseur;

Dans le second mode de réalisation, la largeur du film fait avantageusement toute la largeur de la bande de fermeture, les cales d'épaisseur étant collées sur ce film.

Dans une réalisation alternative, la bande de fermeture reçoit les cales d'épaisseur qui peuvent notamment être collées sur ladite bande.

Préférablement le matériau conducteur thermique possède une conductivité thermique supérieure à 50W.m⁻¹.K⁻¹ à 20°C.

Avantageusement, le matériau conducteur thermique possède une conductivité thermique de 150 W.m⁻¹.K⁻¹ à 500 W.m⁻¹.K⁻¹.

### Brève description des dessins:

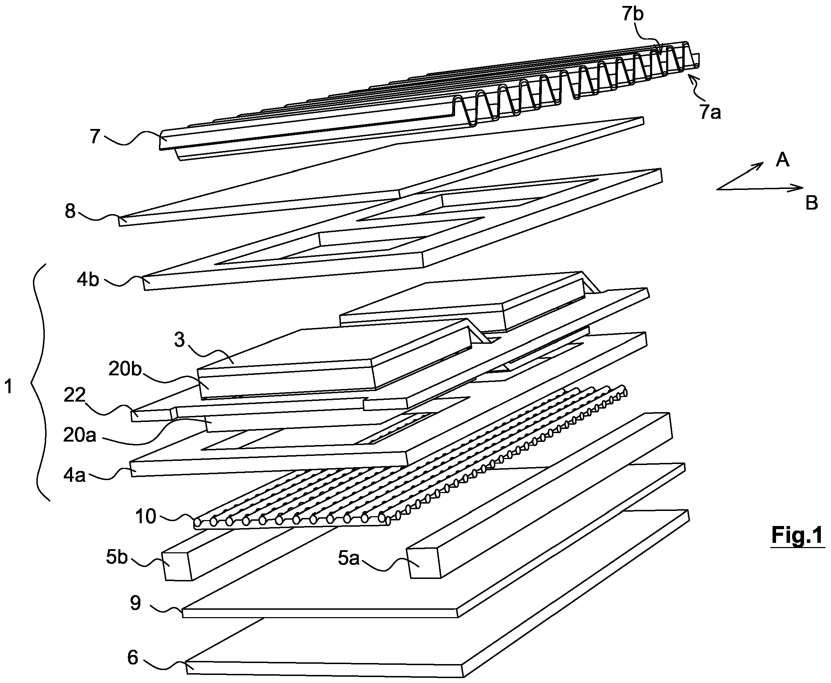

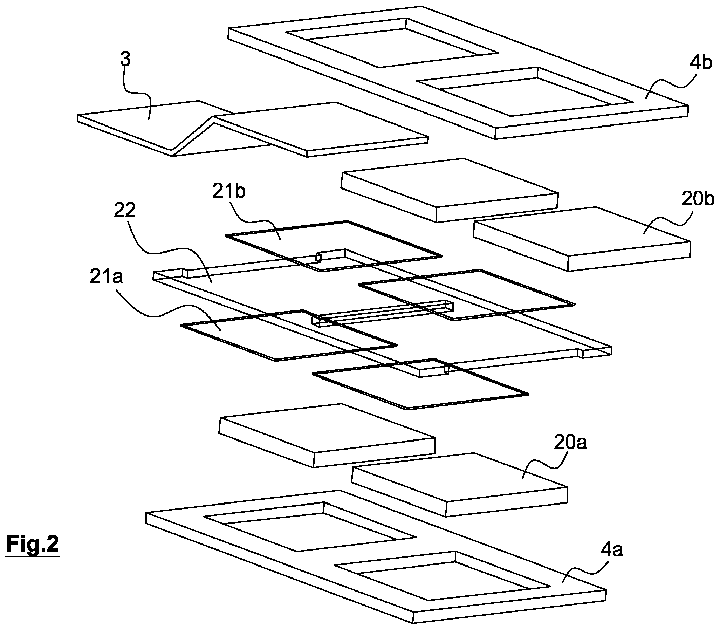

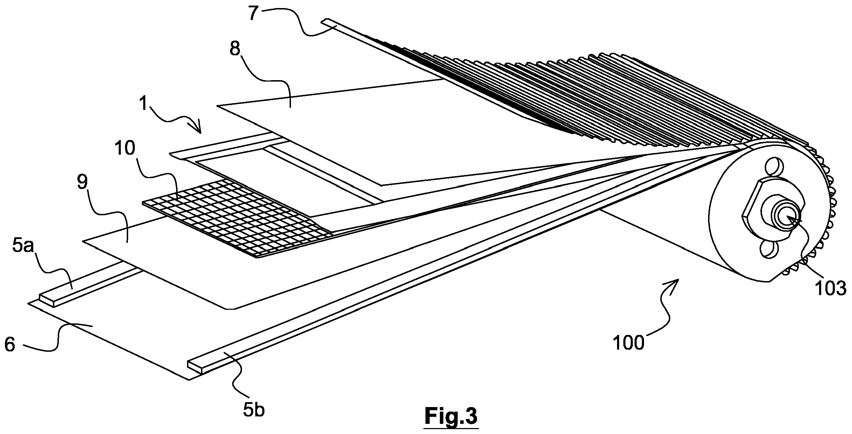

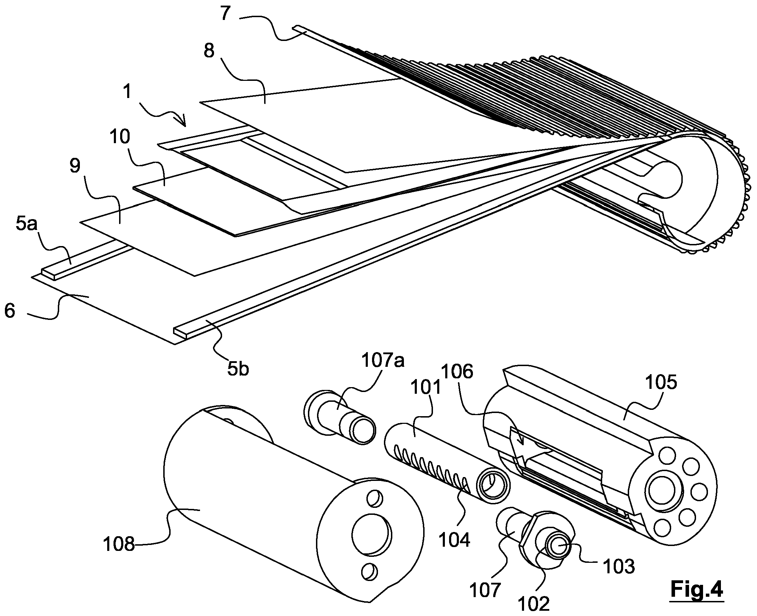

D'autres caractéristiques et avantages de l'invention seront apparents à la lecture de la description qui suit d'un exemple non limitatif de réalisation de l'invention en référence aux dessins qui représentent:
en figure 1: une vue en éclaté d'un segment de convertisseur de l'invention;
en figure2: une vue en éclaté de la bande porteuse de cellules du convertisseur de la figure 1 ;
en figure 3: une vue schématique de l'enroulement du convertisseur sur un connecteur central en perspective;
en figure 4: la vue de la figure 3 avec le connecteur central démonté;

### Description détaillée de modes de réalisation de l'invention

L'invention concerne un convertisseur électrochimique ou pile à combustible comportant une bande porteuse de cellules enroulée sur elle même.

La figure 1 représente un tronçon vu en éclaté d'un convertisseur électrochimique comportant une bande 1 porteuse de cellules électrochimiques unitaires 2.

Les cellules unitaires sont comme dans le document WO2011/124863 A1 disposées l'une derrière l'autre selon un axe longitudinal A de la bande porteuse et reliées en série par des liaisons électriques 3 formées par des bandelettes passant d'une face à l'autre de la bande porteuse de sorte que l'anode d'une cellule soit reliées à la cathode d'une cellule adjacente.

La bande porteuse est un complexe représenté à la figure 2, comportant une âme électrolyte ou couche électrolytique 22 avec sur une première face des revêtements catalytiques anodiques 21a et sur une seconde face des revêtements catalytiques cathodiques 21b sur lesquels sont déposées des couches de diffusion gazeuses 20a, 20b et deux bandes support 4a, 4b percées de fenêtres d'accès aux cellules et disposées sur les faces opposées de l'âme.

La bande porteuse est prise en sandwich entre deux couches externes, l'une faisant partie de moyens 5a, 5b, 6 de réalisation d'un conduit de transport d'hydrogène sur les anodes des cellules sur une première face de la bande porteuse et l'autre formant des moyens de canalisation d'air 7 sur une seconde face de la bande porteuse côté cathodes.

La bande porteuse avec le conduit et les moyens de canalisation est enroulée sur elle même autour d'un axe perpendiculaire audit axe longitudinal A.

Les moyens de canalisation d'air 7 sont réalisés au moyen d'un feuillard ondulé réalisant des canaux 7a, 7b s'étendant dans une direction B perpendiculaire à l'axe longitudinal A de la bande et disposés alternativement d'un côté et de l'autre du feuillard de sorte que le feuillard forme un séparateur entre un flux d'air de refroidissement et un flux d'air de réaction cathodique.

Ces moyens constituent une couche externe de la pile côté cathodes, pile déroulée.

Le flux d'air de réaction cathodique et le flux d'air de refroidissement permettent de limiter l'échauffement de la pile.

De manière avantageuse, le feuillard est réalisé dans un matériau conducteur thermique ce qui permet d'accroître les échanges thermiques entre les deux faces du feuillard, améliorer le refroidissement de la pile et de ce fait limiter son assèchement par évaporation.

Le matériau conducteur thermique pour réaliser le feuillard peut être un polymère chargé avec des charges graphites et/ou métalliques (cuivre, aluminium, acier et les alliages) ou d'autres charges conductrices thermiques. A titre d'exemple le matériau peut notamment être un PP chargé graphite. Une solution préférentielle prévoit un métal tel que l'aluminium qui offre une bonne résistance à la traction pour le bobinage du convertisseur tout en restant relativement léger.

Le feuillard conducteur thermique est choisi avec une conductivité thermique par exemple supérieure à 50W.m⁻¹.K⁻¹ à 20°C Jusqu'à de l'ordre de 150 W.m⁻¹.K⁻¹ à 300 W.m⁻¹.K⁻¹ pour un feuillard à base d'aluminium.

Le feuillard en plus de sa capacité de conduction thermique apporte une contention métallique des enroulements. Notamment, un feuillard aluminium d'une épaisseur de 40 à 150 microns et par exemple entre 70 et 80 microns permet de réaliser un convertisseur enroulé compact, robuste et relativement léger.

Dans l'exemple de la figure 1 où le feuillard est métallique, il est soit nécessaire de disposer un élément isolant électrique entre les cathodes et le feuillard soit nécessaire de réaliser une isolation électrique sur le feuillard.

En outre, il peut être souhaitable de protéger la pile des impuretés et poussières dans l'air circulant sur les cathodes et la pile selon l'exemple représenté comporte un textile électriquement isolant 8 disposé sous le feuillard.

Ce textile a pour objectif en outre de laisser passer l'air vers les cathodes des cellules et de retenir l'humidité sur les cellules.

Il est possible de ne pas utiliser un tel matériau textile pour simplifier le montage de la pile.

Le textile est un textile tissé, un textile non tissé ou un feutre réalisé dans un matériau poreux non conducteur adapté à retenir l'eau côté cathodes notamment un non tissé à fibres sélectionnées parmi les polyester, polyéthylène, polypropylène, polyoléfines, polyamide ou un feutre isolant électrique.

Pour retenir l'eau côté cathodes, le textile est par nature ou par traitement de surface un textile adapté à maintenir les cathodes humides mais aussi permettant d'évacuer le surplus d'eau.

Outre sa fonction d'isolant électrique, le textile constitue un filtre à impuretés de protection des cathodes.

Pour réaliser sa fonction de maintien d'humidité et d'évacuation de surplus d'eau, les caractéristique du textile vont être adaptées pour réguler le transfert d'eau de la face du textile en contact avec les cathodes vers sa face en contact avec le feuillard. Pour ce faire il est notamment possible de jouer sur le caractère hydrophile/hydrophobe du textile.

Selon la figure 1, la couche de matériau textile comporte des bordures 8a, 8b de compensation d'épaisseur des cathodes 21b, des couches de diffusion gazeuses cathodiques 20b et des parties de bandelettes 3 sur les cathodes en sorte de limiter ou éviter un passage d'air direct vers les cathodes, un tel passage direct pouvant amener des impuretés sur les cathodes.

Il est toutefois possible de se passer de ces bordures dans le cas où la couche de matériau textile est suffisamment épaisse et compressible pour compenser naturellement lors de son écrasement l'épaisseur des éléments constituant les cathodes.

Un revêtement sur le feuillard 7 côté cathodes peut aussi isoler électriquement le feuillard des cathodes sans utiliser de matériau textile entre le feuillard et les cathodes.

Le revêtement peut notamment être une peinture, un vernis ou un revêtement anodique.

Ce peut aussi être un traitement de surface isolant électrique.

Le revêtement du feuillard côté cathodes peut aussi être un film polymère, par exemple de type PET, PE ou PA déposé sur le feuillard aluminium ondulé.

Enfin, le revêtement du feuillard peut aussi comprendre ou être un revêtement anticorrosion.

Selon l'exemple représenté, une partie du conduit de transport d'hydrogène est aussi réalisée dans un matériau conducteur thermique équivalent à celui du feuillard ondulé.

Le conduit de transport d'hydrogène est constitué par une bande de fermeture 6, en regard de la face 1b de la bande porteuse portant les anodes, et par des cales d'épaisseur continues 5a, 5b longeant les anodes de la bande porteuse et reliant ladite face et la bande de fermeture.

La partie du conduit en matériau conducteur thermique est la bande de fermeture 6 qui constitue une couche externe de la pile côté anodes, pile déroulée.

Cette bande de fermeture peut être métallique ou être un polymère chargé d'un matériau conducteur thermique.

Comme le feuillard conducteur thermique, la bande de fermeture peut être choisie avec une conductivité thermique par exemple supérieure à 50W.m⁻¹.K⁻¹ à 20°C et de l'ordre de 150 W.m⁻¹.K⁻¹ à 300 W.m⁻¹.K⁻¹ pour une bande sous forme d'une feuille à base d'aluminium et peut aller jusqu'à 500 W.m⁻¹.K⁻¹.

Dans le cas où tant le feuillard ondulé que la bande de fermeture sont conducteurs thermiques, leurs faces externes au convertisseur se trouvent en contact lors de l'enroulement de la bande ce qui homogénéise la température du convertisseur sur sa longueur.

Pour conduire l'hydrogène côté anodes et éviter que le conduit ne s'écrase pas lors de l'enroulement du convertisseur sur lui même, un diffuseur anodique est disposé entre les anodes et la bande de fermeture.

Selon l'exemple, le diffuseur anodique est une grille anodique 10. Cette grille anodique 10 est réalisée dans un matériau isolant électrique pour isoler les anodes entre elles.

Dans le mode de réalisation particulier représenté, la grille anodique comporte des premiers fils orientés dans le sens longitudinal de la bande porteuse et alignés côte à côte et des seconds fils posés transversalement d'un même côté sur les premiers fils.

Des passages d'hydrogène longitudinaux continus sont réalisés entre les premiers fils.

La grille anodique peut comporter des premiers fils d'orientation quelconque croisant des seconds fils.

Elle peut aussi comporter une armure à fils de chaine parallèles à la direction longitudinale de la bande porteuse et fils de trame perpendiculaire à cette direction.

Pour offrir une bonne tenue mécanique et limiter les pertes de charge le long de la bande, le pas de la grille est choisi préférablement de 0,2mm à 2mm.

Pour accroître la résistance électrique par rapport à la bande de fermeture 6, un isolant anodique, par exemple un film isolant électrique 9 offrant une faible isolation thermique, film PET ou pouvant aussi être un film PE, PA voir PTFE (Teflon®), polyimide (Kapton®) ou autre, est intercalé entre la bande de fermeture 6 et la grille anodique 10.

Le film isolant et la grille anodique peuvent être combinés en une seule pièce pour réaliser un isolant pourvu de canaux côté anodes, Le diffuseur d'hydrogène anodique devenant dans ce cas un film isolant électrique pourvu de canaux longitudinaux.

Selon un mode de réalisation, la bande de fermeture 6 reçoit les cales d'épaisseur 5a, 5b.

Les cales d'épaisseur continues 5a, 5b sont représentées pré-collées sur la bande de fermeture 6. Entre ces cales se logent le film isolant électrique 9 et la grille anodique 10.

En variante, le film isolant 9 peut être de même largeur que la bande de fermeture et recevoir les cales d'épaisseur qui sont collées sur ce film isolant électrique.

Le rôle des cales d'épaisseur est de refermer les canaux en compensant l'épaisseur des anodes 21a, des couches de diffusion gazeuse anodiques 20a, des parties de bandelettes 3 sur les anodes de même qu'ici l'épaisseur de la grille anodique 10 et éventuellement du film isolant électrique 9.

Selon l'exemple, les cales d'épaisseur 5a, 5b sont réalisées au moyen de rubans adhésifs double face épais et sont des rubans étanches à l'hydrogène.

Comme représenté en figure 3, la bande du convertisseur se raccorde sur un dispositif de raccordement central ou connecteur interne 100 débutant l'enroulement. Ce connecteur est plus particulièrement décrit dans le document FR 2 990 302 A1 incorporé ici par référence.

Selon la figure 4, le dispositif de raccordement central 100 comporte un capot 108, un tube 101 et un manchon 105 recevant le tube 101.

Le tube est pourvu d'une surface externe conductrice de l'électricité et d'une terminaison axiale 102 de raccordement électrique.

Le tube peut notamment être réalisé en cuivre bon conducteur de l'électricité.

Le tube est en outre pourvu d'une terminaison 103 de raccordement d'un premier gaz et de lumières radiales 104 de passage dudit premier gaz, le tube formant un canal de distribution du premier gaz entre la terminaison de raccordement et les lumières radiales.

Le manchon 105 est un manchon isolant électrique qui est muni d'une fenêtre longitudinale 106 ouverte en regard des lumières sur un côté du manchon.

Le dispositif comprend un embout 107 de connexion externe raccordé au tube 101 et faisant office de connecteur électrique et fluidique inséré dans le manchon 105 et dépassant du manchon.

De retour à la figure 3, le capot 108 et le manchon 105 servent de mandrin pour débuter l'enroulement de la pile ou convertisseur. Les différentes couches réalisant le convertisseur sont déposées les unes sur les autres au moment de leur enroulement sur le mandrin et enroulées ensemble de même que les cales d'épaisseur en ruban adhésif double face sont collées avec la bande support 4a et la bande de fermeture 6 lors de l'enroulement de la bande pour éviter des plissements ou décollements du fait de l'épaisseur des éléments enroulés.

La tension des diverses couches à enrouler est réglée pour que la bande de fermeture 6 et le feuillard ondulé de canalisation d'air maintiennent les diverses couches du convertisseur en appui les unes sur les autres sans toutefois appliquer une pression trop importante sur les cellules.

Une fois l'enroulement terminé, un connecteur de fin de bande, tel que décrit dans le document FR 2 990 302 A1 précité, muni d'un élément de contact électrique pour raccorder la dernière bandelette de la bande (en considérant que la première bandelette est la bandelette raccordée au connecteur 100 central) et muni d'un raccordement fluidique avec la fin du conduit de transport d'hydrogène est monté sur la fin de la bande et des couches du convertisseur qui peut être muni d'un ventilateur de circulation d'air.

Pour ce qui concerne le côté anodique, comme vu précédemment, les cellules sont disposées dans un conduit comportant une entrée et une sortie et on privilégie un fonctionnement "en cul de sac" c'est à dire que le raccordement fluidique à la sortie du conduit comporte une vanne fermée la majeure partie du temps de fonctionnement du convertisseur de sorte que l'hydrogène ne circule pas mais baigne les anodes sous une légère surpression par rapport à l'ambiante pour être consommé au fur et à mesure du fonctionnement du convertisseur.

Par contre, pour éviter l'accumulation d'eau côté anodes, la vanne à la sortie du conduit est ouverte de temps en temps, par exemple toutes les 2mn pendant 1/2 sec à 1 sec, pour purger le conduit de son eau.

Pour fixer les idées les épaisseurs des diverses couches en rapport à la figure 1 qui ne respecte pas les rapports d'épaisseur pour une meilleure lisibilité sont par exemple:
séparateur cathodique, feuillard ondulé 7, de 1 à 5 mm;
étoffe isolante électrique ou feutre cathodique isolant, matériau textile 8, de 0,1 à 1 mm;
collecteur électrique, liaison électrique bandelette 3, de 0,05 à 0,5 mm;
GDL, couche de diffusion gazeuse cathodique 20b, de 0,1 à 0,5 mm;
catalyseur cathodique 21b, de 0,005 à 0,05 mm;
couche électrolytique 22, de 0,01 à 0,05 mm;
catalyseur anodique 21a, de 0,005 à 0,05 mm;
GDL, couche de diffusion gazeuse anodique 20a, de 0,1 à 0,5 mm;
second collecteur électrique 3, de 0,05 à 0,5 mm
diffuseur d'hydrogène, grille anodique 10, de 0,2 à 2 mm;
isolant anodique, de 0,001 à 0,1 mm;
bande de fermeture 6, de 0,04 à 0,15 mm.

La largeur de la pile est de l'ordre de 30 à 250 mm selon l'intensité du courant électrique recherchée, la longueur de la bande dépendant du nombre de cellules et donc de la tension recherchée alors que les cellules sont par exemple à base carrée de longueur/largeur de l'ordre de 20 à 240 mm.

L'invention ne se limite pas à l'exemple représenté et notamment il est possible de réaliser selon l'invention un convertisseur comportant plusieurs séries de cellules côte à côte.

## Revendications

1. - Convertisseur électrochimique comportant une bande (1) porteuse de cellules électrochimiques unitaires (2) disposées l'une derrière l'autre selon un axe longitudinal (A) de la bande porteuse et reliées en série par des liaisons électriques constituées par des bandelettes (3) passant d'une face à l'autre de la bande porteuse, ladite bande porteuse étant enroulée sur elle même autour d'un axe perpendiculaire audit axe longitudinal, le convertisseur comportant en outre des moyens (4, 5a, 5b, 6) de réalisation d'un conduit de transport d'hydrogène sur une première face de la bande porteuse portant les anodes et des moyens de canalisation d'air sur une seconde face de la bande porteuse portant les cathodes, **caractérisé en ce que** les moyens de canalisation d'air sont réalisés au moyen d'un feuillard ondulé (7) conducteur thermique réalisant des canaux (7a, 7b) dans une direction (B) perpendiculaire à l'axe longitudinal (A) de la bande et formant un séparateur entre un flux d'air de refroidissement et un flux d'air de réaction cathodique, le feuillard constituant une couche externe du convertisseur réalisée dans un matériau conducteur thermique et **en ce que** le conduit de transport d'hydrogène comporte une bande de fermeture (6) formant une couche externe du convertisseur côté anodes, en regard de la face de la bande porteuse portant les anodes et pour lequel la bande de fermeture (6) est réalisée en matériau conducteur thermique.

2. - Convertisseur électrochimique selon la revendication 1 pour lequel le feuillard ondulé (7) conducteur thermique est un feuillard métallique.

3. - Convertisseur électrochimique selon la revendication 1 ou 2 pour lequel le feuillard ondulé (7) est un feuillard aluminium.

4. - Convertisseur électrochimique selon la revendication 2 ou 3 pour lequel une couche de matériau isolant électrique (8) est disposée entre le feuillard métallique et les cathodes de la bande.

5. - Convertisseur électrochimique selon la revendication 4 pour lequel la couche de matériau isolant électrique (8) est un matériau perméable à l'air.

6. - Convertisseur électrochimique selon l'une quelconque des revendications précédentes pour lequel le feuillard (7) est pourvu d'un revêtement isolant électrique côté cathodes.

7. - Convertisseur électrochimique selon la revendication 6 pour lequel le revêtement du feuillard côté cathodes est une peinture, un vernis ou un revêtement anodique et/ou un traitement de surface isolant électrique.

8. - Convertisseur électrochimique selon la revendication 6 pour lequel le revêtement du feuillard côté cathodes est un film polymère déposé sur le feuillard aluminium ondulé.

9. - Convertisseur électrochimique selon la revendication 6, 7 ou 8 pour lequel le revêtement du feuillard comprend ou est un revêtement anticorrosion.

10. - Convertisseur électrochimique selon l'une quelconque des revendications précédentes pour lequel la bande de fermeture (6) formant une couche externe du convertisseur côté anodes, en regard de la face de la bande porteuse portant les anodes comporte un revêtement isolant côté anodes.

11. - Convertisseur électrochimique selon l'une quelconque des revendications précédentes pour lequel des cales d'épaisseur (5a, 5b) continues longent les anodes de la bande porteuse et relient ladite face et la bande de fermeture.

12. - Convertisseur électrochimique selon l'une quelconque des revendications précédentes pour lequel la bande de fermeture (6) est métallique.

13. - Convertisseur électrochimique selon l'une quelconques des revendications 1 à 11 pour lequel la bande de fermeture (6) est un polymère chargé conducteur thermique.

14. - Convertisseur électrochimique selon l'une quelconque des revendications précédentes pour lequel un film isolant électrique (9) est intercalé entre la bande de fermeture (6) et les anodes.

15. - Convertisseur électrochimique selon les revendication 11 et 14 pour lequel le film isolant électrique (9) est positionné entre les cales d'épaisseur (5a, 5b).

16. - Convertisseur électrochimique selon les revendications 11 et 14 pour lequel le film isolant électrique (9) est collé sous la bande de fermeture et reçoit les cales d'épaisseur (5a, 5b).

17. - Convertisseur électrochimique selon la revendication 11 pour lequel la bande de fermeture reçoit les cales d'épaisseur (5a, 5b).

18. - Convertisseur électrochimique selon l'une quelconque des revendications précédentes pour lequel le matériau conducteur thermique possède une conductivité thermique supérieure à 50W.m⁻¹.K⁻¹ à 20°C.

19. - Convertisseur électrochimique selon la revendication 18 pour lequel le matériau conducteur thermique possède une conductivité thermique de 150 W.m⁻¹.K⁻¹ à 500 W.m⁻¹.K⁻¹.

## Patentansprüche

1. Elektrochemischer Wandler, umfassend eine Trägerbahn (1) elektrochemischer Einheitszellen (2), welche eine hinter der anderen gemäß einer Längsachse (A) der Trägerbahn angeordnet und durch elektrische Verbindungen in Serie verbunden sind, die aus Streifen (3) bestehen, welche von einer Fläche zur anderen der Trägerbahn verlaufen, wobei die Trägerbahn in sich selbst um eine Achse rechtwinklig zur Längsachse aufgerollt ist, wobei der Wandler außerdem Mittel (4, 5a, 5b, 6) zur Bildung einer Wasserstofftransportleitung an einer ersten Fläche der Trägerbahn umfasst, die Anoden umfasst, und Mittel zur Leitung von Luft auf einer zweiten Fläche der Trägerbahn, die Kathoden umfasst, **dadurch gekennzeichnet, dass** die Mittel zur Leitung von Luft mittels eines wärmeleitenden gewellten Bands (7) ausgeführt sind, das Kanäle (7a, 7b) in einer Richtung (B) rechtwinklig zur Längsachse (A) der Bahn bildet und eine Trennung zwischen einem Kühlluftstrom und einem Kathodenreaktionsluftstrom bildet, wobei das Band eine Außenschicht des Wandlers darstellt, die aus einem wärmeleitenden Material hergestellt ist, und dadurch, dass die Wasserstofftransportleitung eine Abschlussbahn (6) umfasst, die eine Außenschicht des Wandlers neben den Anoden gegenüber der die Anoden tragenden Fläche der Trägerbahn umfasst,
und wobei die Abschlussbahn (6) aus einem wärmeleitenden Material hergestellt ist.

2. Elektrochemischer Wandler nach Anspruch 1, wobei das wärmeleitende gewellte Band (7) ein Metallband ist.

3. Elektrochemischer Wandler nach Anspruch 1 oder 2, wobei das gewellte Band (7) ein Aluminiumband ist.

4. Elektrochemischer Wandler nach Anspruch 2 oder 3, wobei eine Schicht aus elektrischem Isoliermaterial (8) zwischen dem Metallband und den Kathoden der Bahn angeordnet ist.

5. Elektrochemischer Wandler nach Anspruch 4, wobei die Schicht aus elektrischem Isoliermaterial (8) ein luftdurchlässiges Material ist.

6. Elektrochemischer Wandler nach einem der vorhergehenden Ansprüche, wobei das Band (7) mit einer elektrischen Isolierbeschichtung neben den Kathoden versehen ist.

7. Elektrochemischer Wandler nach Anspruch 6, wobei die Beschichtung des Bands neben den Kathoden eine Farbe, ein Lack oder eine Anodenbeschichtung und/oder eine elektrische Isolieroberflächenbehandlung ist.

8. Elektrochemischer Wandler nach Anspruch 6, wobei die Beschichtung des Bands neben den Kathoden ein Polymerfilm ist, der auf dem gewellten Aluminiumband abgeschieden ist.

9. Elektrochemischer Wandler nach Anspruch 6, 7 oder 8, wobei die Beschichtung des Bands eine Antikorrosionsbeschichtung umfasst oder ist.

10. Elektrochemischer Wandler nach einem der vorhergehenden Ansprüche, wobei die Abschlussbahn (6), die eine Außenschicht des Wandlers neben den Anoden bildet, gegenüber der die Anoden tragenden Fläche der Trägerbahn eine Isolierbeschichtung neben den Anoden umfasst.

11. Elektrochemischer Wandler nach einem der vorhergehenden Ansprüche, wobei kontinuierliche Abstandshalter (5a, 5b) entlang der Anoden der Trägerbahn angeordnet sind und die Fläche und die Abschlussbahn verbinden.

12. Elektrochemischer Wandler nach einem der vorhergehenden Ansprüche, wobei die Abschlussbahn (6) metallisch ist.

13. Elektrochemischer Wandler nach einem der Ansprüche 1 bis 11, wobei die Abschlussbahn (6) ein geladener Polymer-Wärmeleiter ist.

14. Elektrochemischer Wandler nach einem der vorhergehenden Ansprüche, wobei ein elektrischer Isolierfilm (9) zwischen der Abschlussbahn (6) und den Anoden angeordnet ist.

15. Elektrochemischer Wandler nach den Ansprüchen 11 und 14, wobei der elektrische Isolierfilm (9) zwischen den Abstandshaltern (5a, 5b) positioniert ist.

16. Elektrochemischer Wandler nach den Ansprüchen 11 und 14, wobei der elektrische Isolierfilm (9) unter die Abschlussbahn geklebt ist und die Abstandshalter (5a, 5b) aufnimmt.

17. Elektrochemischer Wandler nach Anspruch 11, wobei die Abschlussbahn die Abstandshalter (5a, 5b) aufnimmt.

18. Elektrochemischer Wandler nach einem der vorhergehenden Ansprüche, wobei das wärmeleitende Material eine Wärmeleitfähigkeit von mehr als 50 W.m⁻¹.K⁻¹ bei 20°C aufweist.

19. Elektrochemischer Wandler nach Anspruch 18, wobei das wärmeleitende Material eine Wärmeleitfähigkeit von 150 W.m⁻¹.K⁻¹ bis 500 W.m⁻¹.K⁻¹ aufweist.

## Claims

1. Electrochemical converter including a strip (1) carrying unitary electrochemical cells (2) that are positioned behind one another along a longitudinal axis (A) of the carrier strip and linked in series by electrical links formed by small strips (3) passing from one face to the other of the carrier strip, said carrier strip being wound on itself about an axis perpendicular to said longitudinal axis, the converter furthermore including means (4, 5a, 5b, 6) for producing a conduit for transporting hydrogen to a first face of the carrier strip carrying the anodes and means for channelling air to a second face of the carrier strip carrying the cathodes, **characterized in that** the air-channelling means are produced by way of a thermally conductive corrugated sheet (7) forming channels (7a, 7b) in a direction (B) perpendicular to the longitudinal axis (A) of the strip and forming a separator between a flow of cooling air and a flow of cathodic reaction air, the sheet forming an outer layer of the converter, which layer is made from a thermally conductive material, and **in that** the conduit for transporting hydrogen includes a closure strip (6) forming an outer layer of the converter on the anodes side, opposite the face of the carrier strip carrying the anodes, and wherein the closure strip (6) is made from thermally conductive material.

2. Electrochemical converter according to Claim 1, wherein the thermally conductive corrugated sheet (7) is a metal sheet.

3. Electrochemical converter according to Claim 1 or 2, wherein the corrugated sheet (7) is an aluminium sheet.

4. Electrochemical converter according to Claim 2 or 3, wherein a layer of electrically insulating material (8) is positioned between the metal sheet and the cathodes of the strip.

5. Electrochemical converter according to Claim 4, wherein the layer of electrically insulating material (8) is a material that is permeable to air.

6. Electrochemical converter according to any one of the preceding claims, wherein the sheet (7) is provided with an electrically insulating coating on the cathodes side.

7. Electrochemical converter according to Claim 6, wherein the coating of the sheet on the cathodes side is a paint, a varnish or an anodic coating and/or an electrically insulating surface treatment.

8. Electrochemical converter according to Claim 6, wherein the coating of the sheet on the cathodes side is a polymer film deposited on the corrugated aluminium sheet.

9. Electrochemical converter according to Claim 6, 7 or 8, wherein the coating of the sheet comprises or is an anticorrosion coating.

10. Electrochemical converter according to any one of the preceding claims, wherein the closure strip (6), forming an outer layer of the converter on the anodes side, opposite the face of the carrier strip carrying the anodes, includes an insulating coating on the anodes side.

11. Electrochemical converter according to any one of the preceding claims, wherein continuous shims (5a, 5b) border the anodes of the carrier strip and link said face and the closure strip.

12. Electrochemical converter according to any one of the preceding claims, wherein the closure strip (6) is metallic.

13. Electrochemical converter according to any one of Claims 1 to 11, wherein the closure strip (6) is a thermally conductive charged polymer.

14. Electrochemical converter according to any one of the preceding claims, wherein an electrically insulating film (9) is intercalated between the closure strip (6) and the anodes.

15. Electrochemical converter according to Claims 11 and 14, wherein the electrically insulating film (9) is positioned between the shims (5a, 5b).

16. Electrochemical converter according to Claims 11 and 14, wherein the electrically insulating film (9) is bonded underneath the closure strip and receives the shims (5a, 5b).

17. Electrochemical converter according to Claim 11, wherein the closure strip receives the shims (5a, 5b).

18. Electrochemical converter according to any one of the preceding claims, wherein the thermally conductive material has a thermal conductivity of greater than 50 W.m⁻¹.K⁻¹ at 20°C.

19. Electrochemical converter according to Claim 18, wherein the thermally conductive material has a thermal conductivity of between 150 W.m⁻¹.K⁻¹ and 500 W.m⁻¹.K⁻¹.
